(19) Europäisches Patentamt / European Patent Office / Office européen des brevets

(11) **EP 2 181 904 B1**

## (12) EUROPEAN PATENT SPECIFICATION

(45) Date of publication and mention
of the grant of the patent:
**30.04.2014 Bulletin 2014/18**

(51) Int Cl.:
*B60T 8/32* (2006.01)          *G08G 1/0967* (2006.01)
*G08G 1/16* (2006.01)

(21) Application number: **09171225.7**

(22) Date of filing: **24.09.2009**

(54) **Safe driving evaluation system and safe driving evaluation program**

System zur Bewertung sicheren Fahrens und Programm zur Bewertung sicheren Fahrens

Système d'évaluation de conduite sécurisée et programme d'évaluation de conduite sécurisée

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.10.2008 JP 2008280371**

(43) Date of publication of application:
**05.05.2010 Bulletin 2010/18**

(73) Proprietor: **AISIN AW CO., LTD.
Anjo-shi, Aichi 444-1192 (JP)**

(72) Inventor: **Miura, Naoki
Anjo-shi, Aichi 444-1192 (JP)**

(74) Representative: **TBK
Bavariaring 4-6
80336 München (DE)**

(56) References cited:
**WO-A1-2007/049110          US-A1- 2007 262 640
US-B1- 6 434 480**

**Description**

BACKGROUND OF THE INVENTION

The present invention relates to a safe driving evaluation system and a safe driving evaluation program which are based on a sudden braking percentage.

Description of the Related Art

There are conventional systems that evaluate vehicle driving based on the frequency of sudden braking. For example, Japanese Patent Application Publication No. JP-A-2008-77502 describes art that evaluates a safe driving degree, which indicates how safe a driver is driving based on the frequency of sudden starts and sudden braking per unit time. Japanese Patent Application Publication No. JP-A-2005-7932 also describes art that calculates a sudden braking frequency as the number of times sudden braking occurs per predetermined period, or as a ratio of the number of times sudden braking occurs to the total number of braking operations. Comments are then provided to the driver to encourage more appropriate braking if the sudden braking frequency is higher than a standard frequency.

SUMMARY OF THE INVENTION

However, sudden braking in the systems described in JP-A-2008-77502 and JP-A-2005-7932 are all treated the same as one sudden braking operation. Therefore, if the art described in JP-A-2008-77502 or JP-A-2005-7932 is used for a safe driving evaluation, the results of the safe driving evaluation may lack validity. Namely on roads with smooth traffic flows, there is little need for braking as long as there is no congestion. If sudden braking occurs, it would likely have a large effect on a following vehicle. However, the sudden braking in this case is treated the same as any other sudden braking. Therefore, although the above systems can suppress the overall frequency with which sudden braking occurs, the safe driving evaluations do not give any consideration to the effect the sudden braking may have on a following vehicle.

The present invention was devised in light of the foregoing problem, and provides a safe driving evaluation system and a safe driving evaluation program that perform a safe driving evaluation based on a sudden braking percentage, which considers the necessity of braking at a location where sudden braking occurred, in order to increase a driver's awareness to refrain from sudden braking, particularly on a road where the necessity for sudden braking is considered small.

In order to achieve the above object, a safe driving evaluation system according to a first aspect of the present invention includes: a counting unit that counts a frequency of a braking operation of a vehicle; a determination unit that determines whether the braking operation is a sudden braking operation; a percentage calculation unit that calculates a sudden braking percentage as a ratio of a sudden braking operation frequency, which is the number of times the braking operation is determined as a sudden braking operation by the determination unit, to the braking operation frequency counted by the counting unit; a correction unit that determines when sudden braking occurs whether a vehicle deceleration frequency is low for a road where the sudden braking occurred, and corrects the sudden braking percentage to a higher value if the vehicle deceleration frequency is determined as low; and an evaluation information acquisition unit that acquires evaluation information based on the sudden braking percentage.

According to the above constitution, the sudden braking percentage is calculated as a ratio of the sudden braking operation frequency to the braking operation frequency. However, the sudden braking percentage may be corrected to a higher value if the sudden braking occurred on a road that normally has a smooth traffic flow, such as an expressway or a bypass road, where the necessity for braking is considered small. Therefore, a sudden braking percentage can be obtained that gives consideration to the effect of the sudden braking on a following vehicle. Because the evaluation information is acquired based on the sudden braking percentage, the driver can objectively find out an overall trend regarding how safely he or she is driving in terms of braking based on the evaluation information. It is thus possible to increase the driver's awareness of safe driving in terms of braking, and increase the driver's awareness of refraining from sudden braking on roads with a low vehicle deceleration frequency where the necessity of sudden braking is considered small.

The safe driving evaluation system may further include a brake assist detection unit that detects an operation signal of a brake assist device of the vehicle, wherein the determination unit determines whether the braking operation is a sudden braking operation based on the operation signal.

In a vehicle that includes a brake assist device, if the speed or strength with which the driver depresses the brake pedal is greater than that during normal braking, a brake assist operation is performed that amplifies the braking effect with respect to the driver's brake depression force. According to this constitution, an existing component can be utilized without providing a special component to easily determine when braking occurs whether the braking operation is a sudden braking operation.

The safe driving evaluation system may further include an acceleration information acquisition unit that acquires information indicating an acceleration of the vehicle, wherein the determination unit determines whether the braking operation is a sudden braking operation based on a deceleration detected by the acceleration information acquisition unit.

Sudden braking generates a large deceleration of the vehicle, and therefore, adopting the above constitution enables suitable determination when braking occurs regarding whether the braking operation is a sudden braking operation.

In addition, the correction unit may determine whether the vehicle deceleration frequency is low for a road where sudden braking occurred based on either or both the number of traffic signals and intersections present within a prescribed deceleration frequency determination zone, which is set using a point where the sudden braking occurred as a reference point.

Roads provided with few traffic signals and intersections can generally be considered roads where the necessity of braking is small. Hence, according to this constitution, such a general road trend can be utilized to easily determine whether the vehicle deceleration frequency for a road is low. Because the determination is based on the number of traffic signals and intersections within a prescribed zone that is set using the point where sudden braking occurred as a reference point, the surrounding conditions of the host vehicle can be suitably reflected in the determination result.

The deceleration frequency determination zone may also be set such that a zone ahead of the point where sudden braking occurred is larger than a zone behind the point.

The vehicle deceleration frequency serves as a reference regarding whether the necessity of sudden braking is small. This necessity is greatly affected by the number of traffic signals and intersections present ahead of the vehicle. Therefore, the area in front of the vehicle should be emphasized more than the area behind the vehicle. Hence, adopting the above constitution enables suitable establishment of the deceleration frequency determination zone.

By including the zone rearward of the point where sudden braking occurred, the actual current location of the vehicle can be included in the deceleration frequency determination zone even if current location information for the vehicle in the safe driving evaluation system has a margin of error in front and back of the actual current location along the traveling direction of the vehicle. Therefore, regardless of whether there is a margin of error as described above, the determination regarding whether the vehicle deceleration frequency is low can be suitably made.

The safe driving evaluation system may further include map data that is referable and includes information regarding a location where either or both a traffic signal and an intersection exist, wherein the correction unit acquires either or both the number of traffic signals and intersections from the map data.

According to this constitution, the number of traffic signals and intersections on the road where sudden braking occurred can be easily acquired.

The safe driving evaluation system may further include referable map data that includes road type information representing types of roads, wherein the correction unit determines whether the vehicle deceleration frequency is low for a road where the sudden braking occurred based on the road type information acquired from the map data.

The road type is generally related to the necessity for braking due to the existence of a traffic signals and intersections. For example, a road indicated as an expressway in the road type information can be considered as having a low vehicle deceleration frequency. According to this constitution, it is possible to determine with a simple configuration whether the vehicle deceleration frequency is low for a road where sudden braking occurred.

The evaluation information acquisition unit may acquire as the evaluation information at least one of points assigned depending on the sudden braking percentage, advice whose content depends on the sudden braking percentage, and a graph display that visually represents the sudden braking percentage at certain times.

According to this constitution, the content of the evaluation according to the sudden braking percentage can be suitably communicated to the driver.

The safe driving evaluation system may further include an information collection unit that collects information regarding the sudden braking percentage from a plurality of vehicles, wherein the evaluation information acquisition unit acquires as the evaluation information either or both a ranking for each vehicle regarding the sudden braking percentage as compared to the other vehicles and a level assigned based on the past sudden braking percentages of each vehicle compared to the other vehicles.

According to this constitution, when the information regarding the sudden braking percentage is collected from a plurality of vehicles, the content of the evaluation information can be used as evaluation content that is based on a comparison with other vehicles. Therefore, the content of the evaluation according to the sudden braking percentage can be more suitably communicated to the driver.

The safe driving evaluation system may further include an on-vehicle terminal device installed in the vehicle; and a central control device provided in communication with a plurality of the on-vehicle terminal devices, wherein when a main power source of the vehicle installed with the on-vehicle terminal device is turned off, the on-vehicle terminal device sends information regarding the sudden braking percentage between turning the main power source on and off to the central control device, and the central control device generates the evaluation information for the on-vehicle terminal device based on the information regarding the sudden braking percentage received from the on-vehicle terminal device.

According to this constitution, information regarding the sudden braking percentage is collected in the central control device from the on-vehicle terminal devices respectively installed in the plurality of vehicles. Based on the information regarding the sudden braking percentages for the plurality of vehicles, the evaluation information for each on-vehicle terminal device can be generated. Accordingly, evaluation information with suitable content based on a comparison of the plurality of vehicles can be provided to each on-vehicle terminal device. In addition, when the main power source of the vehicle installed with the on-vehicle terminal device is turned off, information regarding the sudden braking percentage between turning the main power source on and off is sent to the central control device. Therefore, it is possible to collect the information regarding the sudden braking percentage while the main power source of the vehicle is turned on in the central control device with a small number of communications. Consequently, much information can be efficiently collected in the central control device so that more suitable evaluation information can be provided to each on-vehicle terminal device.

The technical constitution of the safe driving evaluation system according to the first aspect of the present invention, having the respective constitutions described above, may be applied to a safe driving evaluation method and a safe driving evaluation program, and therefore, the present invention also claims rights as this type of method and program.

A safe driving evaluation program in such case performs in a computer the functions of: counting a frequency of a braking operation of a vehicle; determining whether the braking operation is a sudden braking operation; calculating a sudden braking percentage as a ratio of a sudden braking operation frequency, which is the number of times the braking operation is determined as a sudden braking operation by the determination unit, to the braking operation frequency counted by the counting unit; determining when sudden braking occurs whether a vehicle deceleration frequency is low for a road where the sudden braking occurred, and corrects the sudden braking percentage to a higher value if the vehicle deceleration frequency is determined as low; and acquiring evaluation information based on the sudden braking percentage.

Needless to say, this safe driving evaluation program is also capable of obtaining the actions and effects of the safe driving evaluation system described above, and moreover, the several techniques cited as preferred constitutional examples thereof may be incorporated therein.

## BRIEF DESCRIPTION OF THE DRAWINGS

FIG. 1 is a block diagram that shows an overall configuration of a navigation device according to an embodiment of the present invention;
FIG. 2 is a block diagram that shows an overall configuration of a central control server according to the embodiment of the present invention;
FIG. 3 is a drawing that shows an example of a total evaluation screen that displays evaluation information acquired by an evaluation information acquisition unit;
FIG. 4 is a drawing that shows an example of a guidance screen that displays evaluation graph information for sequentially showing changes in a sudden braking percentage during travel;
FIG. 5 is a flowchart that shows an overall procedure for a safe driving evaluation process according to the embodiment of the present invention; and
FIG. 6 is a flowchart showing a procedure of sudden braking percentage calculation processing.

## DETAILED DESCRIPTION OF THE EMBODIMENTS

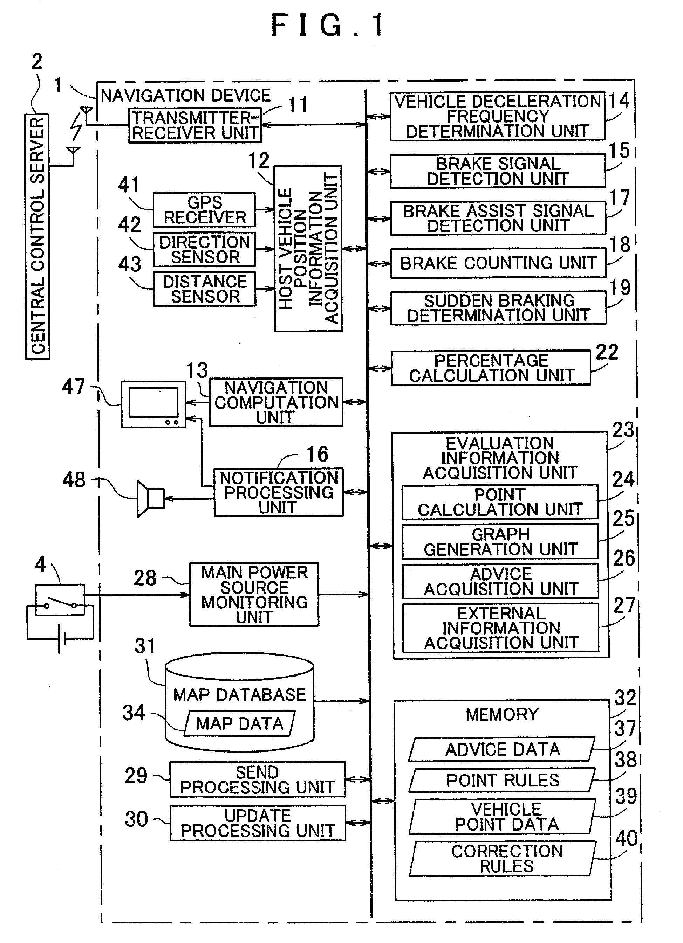

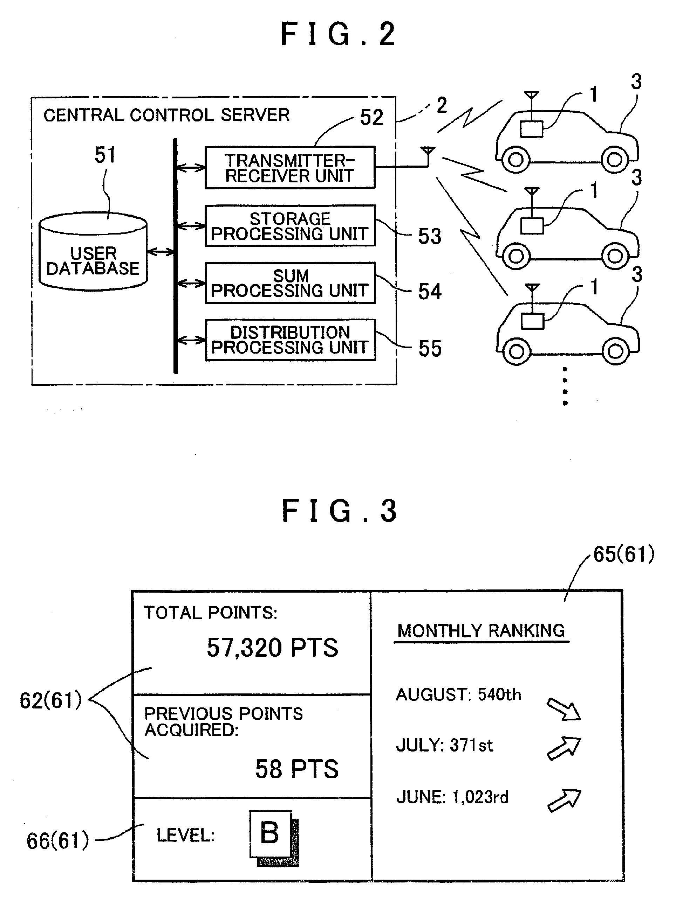

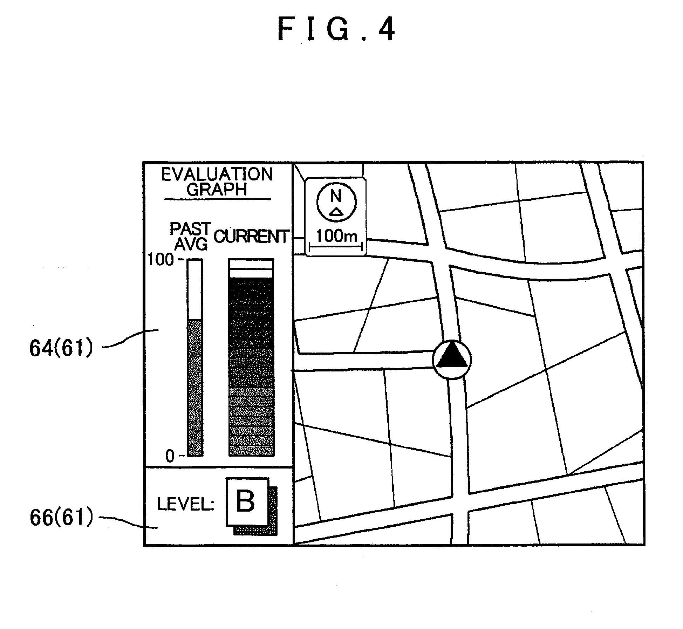

Embodiments of the present invention will be described now with reference to the drawings. The description here regards an example in which the safe driving evaluation system according to the present invention includes an on-vehicle navigation device 1 and a central control server 2 that is provided in communication with a plurality of navigation devices 1. FIG. 1 is a block diagram that shows an overall configuration of the navigation device 1. The navigation device 1 that forms the safe driving evaluation system counts the number of times a braking operation of a vehicle 3 is performed (a braking frequency), and determines whether the braking operation is a sudden braking operation. When calculating a sudden braking percentage that is a ratio of a sudden braking frequency to the braking frequency, the sudden braking percentage is corrected to a higher value if the sudden braking occurred on a road where the necessity for braking is considered small. Based on the sudden braking percentage, evaluation information 61 (see FIGS. 3 and 4) is acquired and output. In the evaluation information 61, a lower sudden braking percentage results in a better evaluation. Accordingly, the driver of the vehicle 3 installed with the navigation device 1 can objectively find out an overall trend regarding how safely he or she is driving in terms of braking based on the evaluation information 61. It is thus possible to increase the driver's awareness of safe driving in terms of braking, and increase the driver's awareness of refraining from sudden braking on roads where the necessity of sudden braking is considered small.

FIG. 2 is a block diagram that shows an overall configuration of the central control server 2. The central control server 2 collects and sums information from the plurality of navigation devices 1 that are respectively installed in a plurality of vehicles 3. The central control server 2 then generates the evaluation information 61 from the collected information and distributes the evaluation information 61 to the navigation devices 1. In the present embodiment, the navigation device 1 corresponds to an on-vehicle terminal device of the present invention, and the central control server 2 corresponds to a central control device and an information collection unit of the present invention.

1. Configuration of navigation device

The configuration of the navigation device 1 will now be described. The components of the navigation device 1 shown in FIG. 1 each have as its core member a computation processing device such as a CPU or the like that is one of mutually shared and independently utilized. Each component executes various processes on received data that may be implemented by hardware, software (a program), or via a combination of both hardware and software. In the present embodiment, the navigation device 1 includes a transmitter-receiver unit 11; a host vehicle position acquisition unit 12; a navigation computation unit 13; a notification processing unit 16; a main power source monitoring unit 28; a send processing unit 29; an update processing unit 30; a vehicle deceleration frequency determination unit 14; a brake signal detection unit; a brake assist signal detection unit 17; a brake counting unit 18; a sudden braking determination unit 19; a percentage calculation unit 22; and an evaluation information acquisition unit 23. Each component is also configured to exchange information with the other components via wireless communication using a digital transfer bus or the like. If each component is implemented through software (a program), the software is stored in a storage unit such as a RAM or ROM to which the computation processing device can refer. A map database 31 has a hardware configuration that includes a storage medium (a storage unit) such as a hard disk drive, a flash memory, a DVD drive equipped with a DVD-ROM, or a CD drive equipped with a CD-ROM, for example. A memory 32 also has a hardware configuration that includes a storage medium that is capable of storing and re-writing information, such as a hard disk drive or a flash memory. In addition, the memory 32 may be provided in a storage medium shared with the map database 31 if the map database 31 is configured by a re-writable storage medium. The configuration of each component of the navigation device 1 according to the present embodiment will be explained in detail below.

1-1. Map database

The map database 31 is a database in which map data 34 is stored. Further, the map data 34 includes road network data constituted by a plurality of nodes that represent a plurality of intersections, and a plurality of links connecting the nodes that represent roads. Each link includes information such as road type, area type, link length, road width, and shape interpolation points for expressing link shapes as link attribute information. Here, the road type information is road classification information used when compartmentalizing roads into a plurality of types such as expressways, motorways, local roads, narrow city streets, and mountain roads. In addition to the road network data, the map data 34 includes rendering information required in map display processing and various types of guidance information required in route guidance processing, which are performed by the navigation computation unit 13. Here, the rendering information includes information such as background information required to display road shapes, buildings, rivers and so on, character information required to display city, town and village names, road names, and so on. In addition to this, the map data 34 stored in the map database 31 includes information that indicates the positions of points installed with traffic signals (referred to as signal installation points below). The information that indicates the positions of signal installation points can be stored as additional information for nodes that represent intersections installed with traffic signals (e.g. as a flag that indicates whether there is a traffic signal), or stored as attribute information for links that are connected to such nodes (e.g. information that indicates a traffic signal on one link end).

1-2. Transmitter-receiver unit

The transmitter-receiver unit 11 includes a communication device that sends data to the central control server 2 and receives data from the central control server 2 by wireless communication via a wireless base station or the like. A conventional communication network such as a cellular telephone network or a wireless LAN (Local Area Network), for example, may be used as a wireless communication method. In the present embodiment, the transmitter-receiver unit 11 sends information regarding the sudden braking percentage to the central control server 2, as will be explained later. In addition, the transmitter-receiver unit 11 receives the evaluation information 61 (see FIGS. 3 and 4) that is based on a comparison with other vehicles 3, such as ranking information 65 and level information 66, from the central control server 2. The transmitter-receiver unit 11 also receives update information for updating advice data 37, point rules 38, and correction rules 40 stored in the memory 32. These will be described in more detail later.

1-3. Host vehicle position information acquisition unit

The host vehicle position information acquisition unit 12 acquires host vehicle position information that indicates the current position of the host vehicle. The host vehicle position information acquisition unit 12 is connected to a Global Positioning System (GPS) receiver 41, a direction sensor 42, and a distance sensor 43. Here, the GPS receiver 41 is a device that receives a GPS signal from a GPS satellite. The GPS signal is normally received every second and output to the host vehicle position information acquisition unit 12. In the host vehicle position information acquisition unit 12, the signal received by the GPS receiver 41 from the GPS satellite may be analyzed, and additional information may be acquired, such as the current position (coordinates) of the vehicle, the direction in which the vehicle is heading, the vehicle speed, and the like. The direction sensor 42 detects the direction in which the host vehicle is heading and changes in the heading of the host vehicle. The direction sensor 42 may be a gyroscope, a geomagnetic sensor, or the like, for example. Also, the direction sensor 42 outputs the detected heading of the host vehicle to the host vehicle position information acquisition unit 12. The distance sensor 43 detects the speed of the host vehicle and the distance traveled. The distance sensor 43 may be configured as a vehicle speed pulse sensor that outputs a pulse signal every time a drive shaft, wheel, or the like of the vehicle rotates a certain amount, a yaw sensor and a G sensor that detect an acceleration of the host vehicle, and a circuit that integrates the detected acceleration, for example. Also, the distance sensor 43 outputs information regarding the detected vehicle speed and the detected distance traveled to the host vehicle position information acquisition unit 12.

Based on the outputs from the GPS receiver 41, the direction sensor 42, and the distance sensor 43, the host vehicle position information acquisition unit 12 performs a computation to determine the host vehicle position using conventional methods. In addition, the host vehicle position information acquisition unit 12 executes a correction to match the host vehicle position with a road in the map data 34 by executing a conventional map matching process based on the map data 34 stored in the map database 31. The host vehicle position information corrected by the map matching process is reflected in the host vehicle position information. Thus the host vehicle position information acquisition unit 12 acquires the host vehicle position information that includes the current host vehicle position indicated by the coordinates (longitude and latitude) and information on the current vehicle heading.

1-4. Navigation computation unit

The navigation computation unit 13 is a computation processing unit that operates in accordance with an application program in order to execute navigation functions such as displaying the host vehicle position, calculating a route from a departure point to a destination, providing guidance for a route to the destination, and searching for a destination. For example, the navigation computation unit 13 acquires the map data 34 around the host vehicle from the map database 31 to display a map image on a display input device 47, and also executes a process to display a host vehicle position mark superimposed over the map image based on the host vehicle position information. Additionally, the navigation computation unit 13 provides route guidance using either or both the display input device 47 and an audio output device 48, based on the host vehicle position information and a route calculated using a conventional method from the departure point to the destination. The display input device 47 outputs the evaluation information 61 received from the evaluation information acquisition unit 23 (to be explained in more detail later). Note that in addition to the above, the navigation computation unit 13 is connected to various types of conventional components that are required for the navigation device 1, such as a remote controller and a user interface that may be a touch panel integrally provided with the display input device 47.

1-5. Brake counting unit

The brake counting unit 18 functions as a counting unit that counts the number of braking operations of the vehicle 3. In the present embodiment, when the vehicle 3 brakes, a brake signal is input to the brake signal detection unit 15 while the braking is performed. Based on the detection result of the brake signal detection unit 15, the brake counting unit 18 updates the braking frequency by adding 1 to the braking frequency each time braking is performed. Note that information pertaining to the braking frequency is stored in the memory 32 in a form that can be referenced and updated by the brake counting unit 18.

Further note that there may be variation in the brake operation amount during braking. However, the time from detection of the brake signal by the brake signal detection unit 15 until non-detection of the brake signal is counted by the brake counting unit 18 as one braking operation.

1-6. Sudden braking determination unit

The sudden braking determination unit 19 functions as a determination unit that determines whether the braking operation is a sudden braking operation. In the present embodiment, the vehicle 3 includes a brake assist device. If the speed or strength with which the driver depresses the brake pedal is greater than that during normal braking, a brake assist operation is performed that amplifies the braking effect with respect to the driver's brake depression force. When the brake assist operation is executed, a brake assist signal is input to the brake assist signal detection unit 17. The brake assist operation is generally performed during sudden braking, and therefore, the sudden braking determination unit 19 determines whether the braking operation is a sudden braking operation based on the detection result of the brake assist signal detection unit 17. If it is determined that the braking operation is a sudden braking operation, the sudden braking determination unit 19 outputs such information to the percentage calculation unit 22 to be described later. In addition, if the sudden braking determination unit 19 determines that sudden braking has occurred, such information may be output to the notification processing unit 16. The driver may then be cautioned using characters or icons displayed via the display input device 47, or using sounds output via the audio output device 48.

1-7. Vehicle deceleration frequency determination unit

The vehicle deceleration frequency determination unit 14 is a component that determines whether a vehicle deceleration frequency is low for a road where sudden braking occurred. In the present embodiment, when information pertaining to the location of a point of sudden braking is input from the percentage calculation unit 22, such input information is used to determine whether the vehicle deceleration frequency is low for a road where sudden braking occurred. The determination result is then output to the percentage calculation unit 22.

In the present embodiment, the vehicle deceleration frequency determination unit 14 determines whether the vehicle deceleration frequency is low for a road where sudden braking occurred based on the number of traffic signals present within a prescribed deceleration frequency determination zone, which is set using the point where sudden braking occurred as a reference point. For example, if there are five or fewer traffic signals within the prescribed deceleration frequency determination zone, the vehicle deceleration frequency may be determined as low. Note that the number five is merely an example, and may be changed as appropriate. Instead of the number of traffic signals, the determination may be made using the number of intersections, or the vehicle deceleration frequency may be determined based on both the number of traffic signals and intersections. Note that in the present embodiment, the vehicle deceleration frequency determination unit 14 can refer to the map data 34 to acquire the number of traffic signals and intersections present in the road.

The prescribed deceleration frequency determination zone is a zone set along the road on which the vehicle 3 is traveling. For example, setting using the point at which sudden braking occurred as the reference point, the deceleration frequency determination zone can be set as extending 1 kilometer ahead in the traveling direction of the vehicle 3. Note that the distance of 1 kilometer is merely an example, and may be changed as appropriate. In addition, a position separated by a predetermined distance (e.g. 100 meters, changed as appropriate) ahead in the traveling direction of the vehicle 3 from the point where sudden braking occurred may be set as the reference point, and the deceleration frequency determination zone set as extending from the reference point to a position separated by a predetermined distance (e.g. 1 kilometer, changed as appropriate) ahead in the traveling direction of the vehicle 3. The deceleration frequency determination zone may also be set so as to include the point where sudden braking occurred. As an example, the deceleration frequency determination zone may be set between two points, wherein one point is separated by a predetermined distance (e.g. 50 meters, changed as appropriate) opposite the traveling direction of the vehicle 3, with the point where sudden braking occurred serving as the reference point, and the other point is separated by a predetermined distance (e.g. 1 kilometer, changed as appropriate) ahead in the traveling direction of the vehicle 3, with the point where sudden braking occurred serving as the reference point. Thus, the deceleration frequency determination zone may be set such that the zone ahead of the point where sudden braking occurred is larger than the zone behind the point. As another example, the deceleration frequency determination zone may be set between two points, wherein one point is separated by a predetermined distance (e.g. 1 kilometer, changed as appropriate) opposite the traveling direction of the vehicle 3, with the point where sudden braking occurred serving as the reference point, and the other point is separated by the same predetermined distance ahead in the traveling direction of the vehicle 3, with the point where sudden braking occurred serving as the reference point. Thus, the deceleration frequency determination zone may be set such that the zone ahead of the point where sudden braking occurred and the zone behind the point are equidistant. 1-8. Percentage calculation unit

The percentage calculation unit 22 calculates the sudden braking percentage as a ratio of the sudden braking frequency, which is the number of times a braking operation was determined as a sudden braking operation by the sudden braking determination 19, to the braking frequency that is counted by the brake counting unit 18. The percentage calculation unit 22 also functions as a correction unit that corrects the sudden braking percentage to a higher value when sudden braking occurs and the vehicle deceleration frequency is determined as low for the road where sudden braking occurred. In the present embodiment, information pertaining to the braking frequency, the sudden braking frequency, and the sudden braking percentage is stored in the memory 32 in a form that can be referenced and updated by the percentage calculation unit 22.

In the present embodiment, the percentage calculation unit 22 updates the sudden braking percentage to the latest percentage each time braking occurs. When braking occurs and the sudden braking determination unit 19 determines that the braking operation is a sudden braking operation, such information is input to the percentage calculation unit 22. Note that to update the sudden braking frequency, the percentage calculation unit 22 makes a correction to be described later such that an increment for updating the sudden braking frequency becomes larger when the vehicle deceleration frequency is low for the road where sudden braking occurred.

Once information indicating that sudden braking occurred is input from the sudden braking determination unit 19, the percentage calculation unit 22 also acquires information pertaining to the current position of the vehicle, i.e., the location of the point where sudden braking occurred, from the host vehicle position information acquisition unit 12, and outputs such information to the vehicle deceleration frequency determination unit 14. The percentage calculation unit 22 then acquires the determination result from the vehicle deceleration frequency determination unit 14, and performs a correction based on the determination result using a correction coefficient as explained below.

The correction coefficient is a parameter stored in the memory 32, and the value of the correction coefficient is set based on the correction rules 40 also stored in the memory 32. The percentage calculation unit 22 sets the correction coefficient in accordance with the correction rules 40 and based on the determination result of the vehicle deceleration frequency determination unit 14. Note that in the present embodiment, the correction rules 40 set the correction coefficient to 1.2 if the sudden braking occurred on a road with a low vehicle deceleration frequency, and set the correction coefficient to 1.0 if the sudden braking did not occur on a road with a low vehicle deceleration frequency. Further note that the above numerical values 1.2 and 1.0 are merely examples, and how the correction coefficient is set in each case may be changed as appropriate.

To update the sudden braking frequency, the percentage calculation unit 22 adds the product of 1 and the correction coefficient to the pre-update sudden braking frequency. However, no correction is made when the braking frequency is updated by the brake counting unit 18. By updating the sudden braking frequency and the braking frequency as explained above, in the case where sudden braking occurs on a road with a low vehicle deceleration frequency, the increment for updating the sudden braking frequency is corrected so as to become larger. Consequently, the sudden braking percentage that is a ratio of the sudden braking frequency to the braking frequency can be corrected so as to increase.

The percentage calculation unit 22 calculates the sudden braking percentage, which is a ratio of the sudden braking frequency to the braking frequency, using Equation (1) below.

$$\text{Sudden braking percentage (\%)} = (\text{sudden braking frequency}) / (\text{braking frequency}) \times 100 \quad (1)$$

The sudden braking ratio calculated in this manner represents a ratio indicating that the driver's braking operation was not suitable. Conversely, if the sudden braking percentage is X%, then the percentage expressed as (100 - X)% represents a ratio indicating that the braking operation was suitable. Thus, a smaller sudden braking percentage results in an evaluation of safer driving.

Note that the correction rules 40 referenced by the percentage calculation unit 22 can be updated using update information received from the central control server 2. Such update processing is performed by the update processing unit 30. Namely, if the update processing unit 30 receives update information regarding the correction rules 40 from the central control server 2 through the transmitter-receiver unit 11, the update processing unit 30 updates the correction rules 40 stored in the memory 32 based on the update information. Accordingly, the rules may be changed as needed so as to set the sudden braking percentage to a more suitable value based on the total points thus far acquired (described later), the driver's skill level, driving history, and the like.

1-9. Evaluation information acquisition unit

The evaluation information acquisition unit 23 acquires the evaluation information 61 based on the sudden braking percentage calculated by the percentage calculation unit 22. As shown in FIG. 1, the evaluation information acquisition unit 23 here includes a point calculation unit 24, a graph generation unit 25, an advice acquisition unit 26, and an external information acquisition unit 27. As the evaluation information 61, the evaluation information acquisition unit 23 acquires point information 62, advice information, evaluation graph information 64, the ranking information 65, and the level information 66. In addition, the point rules 38 and the advice data 37 referenced by the evaluation information acquisition unit 23 are stored in the memory 32. FIGS. 3 and 4 show an example of a screen displaying the evaluation information 61 acquired by the evaluation information acquisition unit 23 on the display input device 47. Note that the advice information is not shown. Here, FIG. 3 is an example of a total evaluation screen for displaying a result of a comprehensive evaluation regarding the sudden braking percentage thus far, and FIG. 4 is an example of a guidance screen that display the evaluation graph information 64 for sequentially showing changes in the sudden braking percentage during travel of the vehicle 3. Note that the example of FIG. 4 shows the level information 66 and a guidance map for route guidance in addition to the evaluation graph information 64.

The point calculation unit 24 calculates points to be assigned in accordance with the sudden braking percentage. At such time, the point calculation unit 24 refers to the point rules 38 stored in the memory 32, and calculates the points to be assigned based on the point rules 38. The point rules 38 are rules that specify the relationship between the sudden braking percentage calculated by the percentage calculation unit 22 and the assigned points. As an example, in the point rules 38 of the present embodiment, the sudden braking percentage is designated as X% and (100 - X)% calculated. The point rules 38 also specify that 1 point is assigned for every 1%. However, if correcting the sudden braking frequency for calculating the sudden braking percentage causes the sudden braking percentage to exceed 100%, with the sudden braking percentage calculated by the percentage calculation unit 22 per trip between turning the main power source of the vehicle 3 on and off, then zero points are assigned (i.e., no points are assigned). Alternatively, after finding (X - 100)%, 1 point may be subtracted for every 1%.

The point calculation unit 24 also integrates the points per trip calculated as described above and calculates the total points acquired thus far. The total points may be integrated and summed per prescribed period, e.g. every year, and then reset to zero once the year changes and integrated again. Alternatively, the total points may be an integrated value of the total points acquired thus far. The points per trip and total points calculated by the point calculation unit 24 are stored in the memory 32 as vehicle point data 39. In addition, based on the vehicle point data 39 stored in the memory 32, the point calculation unit 24 displays the point information 62, which represents the total points and points that were acquired from previous travel (previously acquired points), on the display input device 47. In the example shown in FIG. 3, such point information 62 is displayed in part of the total evaluation screen.

The point rules 38 referenced by the point calculation unit 24 can be updated using update information received from the central control server 2. Such update processing is performed by the update processing unit 30. Namely, if the update processing unit 30 receives update information regarding the point rules 38 from the central control server 2 through the transmitter-receiver unit 11, the update processing unit 30 updates the point rules 38 stored in the memory 32 based on the update information. Accordingly, the rules may be changed as needed so that the assigned points become a more appropriate value, or changed so as to increase the assigned points for a limited time. Further note that the content of the point rules 38 above is merely one example, and any content may be set for the rules as appropriate. Therefore, the point rules 38 may be suitably set such that the assigned points vary depending on the distance traveled by the vehicle 3 per trip even though the sudden braking percentage is the same.

The graph generation unit 25 generates a graph display that visually represents a safe driving percentage at certain times. The safe driving percentage is derived from the sudden braking percentage and represents the ratio of safe driving in relation to braking. The safe driving percentage (%) is calculated as (100 - X)%, where X% is the sudden braking percentage. However, if the sudden braking percentage exceeds 100% due to a correction, the safe driving percentage is set to 0%. Specifically, the graph generation unit 25 generates the evaluation graph information 64 for sequentially showing changes in the safe driving percentage during travel of the vehicle 3, as illustrated in FIG. 4. The graph generation unit 25 also displays the generated evaluation graph information 64 on the display input device 47. The evaluation graph information 64 includes a graph of the current value of the safe driving percentage and a graph of the past average value of the safe driving percentage. These graphs are arranged side by side so they can be compared against one another. Here, the graph of the current value of the safe driving percentage displays the safe driving percentage for a route traveled after turning on the main power source until the current time, and is sequentially updated as the vehicle 3 travels. The graph of the past average value of the safe driving percentage displays the average value of past information regarding the safe driving percentage for routes traveled between turning the main power source on and off, and the value is updated for each trip of the vehicle 3. Both graphs are shown in the example as bar graphs. Note that information stored in the navigation device 1 or stored per vehicle 3 in the central control server 2 may be used as the information regarding past safe driving percentages.

The advice acquisition unit 26 acquires advice information with content that corresponds to the sudden braking percentage. Here, the advice acquisition unit 26 reads out and acquires advice information with content that corresponds to the sudden braking percentage from the advice data 37 stored in the memory 32. The advice acquisition unit 26 also displays the acquired advice information on the display input device 47. The advice information is statement information for communicating to the driver evaluation content that corresponds to the sudden braking percentage. For example, if the sudden braking percentage is low, a statement commending this fact is acquired as the advice information. Meanwhile, if the sudden braking percentage is high, a statement encouraging the driver to have a higher awareness of safe driving in relation to braking is acquired as the advice information.

The advice data 37 stored in the memory 32 can be updated using update information received from the central control server 2. Such update processing is performed by the update processing unit 30. Namely, if the update processing unit 30 receives update information regarding the advice data 37 from the central control server 2 through the transmitter-receiver unit 11, the update processing unit 30 updates the advice data 37 stored in the memory 32 based on the update information. Accordingly, the content of the advice information may be changed as needed to more suitable content by changing the content of the advice information depending on the driving history or driving habits of the driver, for example.

The external information acquisition unit 27 executes a process to acquire the evaluation information 61 from the central control server 2, which is provided outside the vehicle 3. More specifically, the external information acquisition unit 27 communicates with the central control server 2 through the transmitter-receiver unit 11, and receives the evaluation information 61 generated by comparing the ranking information 65 and level information 66 of other vehicles 3. As described later, the central control server 2 is provided in communication with the navigation devices 1 installed in the plurality of vehicles 3, and collects and sums information regarding the sudden braking percentage from the plurality of vehicles 3. In the present embodiment, the central control server 2 collects from the navigation device 1 of each vehicle 3 and sums information regarding the points assigned depending on the sudden braking percentage, as well as information regarding the braking frequency and the post-correction sudden braking frequency, which serve as source information for calculating the sudden braking percentage. Using the sum result, the central control server 2 then generates the ranking information 65 and the level information 66. The external information acquisition unit 27 of the navigation devices 1 request and acquire the ranking information 65 and the level information 66 generated in this manner from the central control server 2 at a predetermined timing. In the present embodiment, the external information acquisition unit 27 requests the ranking information 65 and the level information 66 from the central control server 2 when the main power source of the vehicle 3 mounted with the navigation device 1 is turned on.

The ranking information 65 indicates the ranking of the vehicles 3 as compared to other vehicles 3 in terms of the sudden braking percentage or the safe driving percentage that was calculated based on this. The ranking information 65 may be information regarding a ranking of average values for the sudden braking percentage of the vehicles within a predetermined period, or a ranking of the total points acquired by the vehicles within a predetermined period. Here, various periods may be set as the predetermined period, such as one year, one month, one week, or one day. The external information acquisition unit 27 also displays the acquired ranking information 65 on the display input device 47. In the present embodiment, as shown in the example of FIG. 3, the ranking information 65 includes a ranking of the point totals acquired every month by each vehicle 3 compared to other vehicles 3, and arrow images that indicate whether the ranking has increased or decreased compared to the previous month.

The level information 66 indicates the level assigned based on the past sudden braking percentage of each vehicle 3 as compared to other vehicles 3 or the safe driving percentage that was calculated based on this. The level information 66 may be information regarding the level to which each vehicle 3 belongs when the vehicles are divided into a plurality of levels depending on the ranking of average values for the sudden braking percentage of the vehicles within a predetermined period, the ranking of the total points acquired by the vehicles 3 within a predetermined period, or the total points acquired by the vehicles 3 thus far. In the present embodiment, the level information 66 is determined by raising or lowering the current level depending on the ranking of the total points acquired in a predetermined period (e.g. in one year). Here, the categories of A, B, C and so on, or the categories of 1, 2, 3 and so on may be used as levels. The external information acquisition unit 27 also displays the acquired level information 66 on the display input device 47. In the present embodiment, as shown in the example of FIG. 3, the level information 66 uses the levels of A, B, C and so on, and the example in the figure indicates that the vehicle 3 resides at the B level.

1-10. Main power source monitoring unit

The main power source monitoring unit 28 monitors the state of a main power source switch 4 of the vehicle 3. A state in which the main power source switch 4 is on and power is supplied to the components of the vehicle 3 is determined as an on state of the main power source. A state in which the main power source switch 4 is off and power is not supplied to the components of the vehicle 3 is determined as an off state of the main power source.

1-11. Send processing unit

The send processing unit 29 executes a process to send information regarding the sudden braking percentage to the central control server 2 at a predetermined timing. More specifically, when the main power source of the vehicle 3 installed with the navigation device 1 is turned off, the send processing unit 29 executes a process to send information regarding the sudden braking percentage between turning the main power source on and off to the central control server 2. The on/off status of the main power source is determined by the main power source monitoring unit 28. In the present embodiment, the send processing unit 29 sends to the central control server 2 information regarding the point information per trip assigned depending on the sudden braking percentage between turning the main power source on and off, as well as information regarding the braking frequency and the post-correction sudden braking frequency, which serve as source information for calculating the sudden braking percentage.

2. Configuration of central control server

The configuration of the central control server 2 will now be described. As shown in FIG. 2, the central control server 2 is provided in communication with the plurality of navigation devices 1 that are respectively installed in the plurality of vehicles 3. The central control server 2 collects and sums information regarding the sudden braking percentage from the navigation devices 1, and generates the evaluation information 61 for the navigation devices 1 based on the summed information. The central control server 2 also distributes the generated evaluation information 61 in accordance with requests from the navigation devices 1.

The components of the central control 2 shown in FIG. 2 each have as its core member a computation processing device such as a CPU or the like that is one of mutually shared and independently utilized. Each component executes various processes on received data that may be implemented by hardware, software (a program), or via a combination of both hardware and software. In the present embodiment, the central control server 2 includes a transmitter-receiver unit 52, a storage processing unit 53, a sum processing unit 54, and a distribution processing unit 55. Each component is also configured to exchange information with the other components via wireless communication using a digital transfer bus or the like. If each component is implemented through software (a program), the software is stored in a storage unit such as a RAM or ROM to which the computation processing device can refer. A user database 51 also has a hardware configuration that includes a storage medium (a storage unit) that is capable of storing and re-writing information, such as a hard disk drive or a flash memory. The configuration of each component of the central control server 2 according to the present embodiment will be explained in detail below.

2-1. Transmitter-receiver unit

The transmitter-receiver unit 52 includes a communication device that sends data to the navigation device 1 installed in the plurality of vehicles 3 and receives data from the navigation device 1 by wireless communication via a wireless base station or the like. The wireless communication method is used in common by the transmitter-receiver unit 11 of the navigation device 1. As explained above, in the present embodiment, the transmitter-receiver unit 52 receives from the navigation device 1 information regarding the sudden braking percentage, more specifically, information regarding the points assigned depending on the sudden braking percentage, as well as information regarding the braking frequency and the post-correction sudden braking frequency, which serve as source information for calculating the sudden braking percentage. In addition, the transmitter-receiver unit 52 sends the evaluation information 61 that is based on a comparison with other vehicles 3, such as the ranking information 65 and the level information 66, to the navigation device 1. The transmitter-receiver unit 52 also sends the update information for updating the advice data 37, the point rules 38, and the correction rules 40 stored in the memory 32 of the navigation device 1.

2-2. Storage processing unit

The storage processing unit 53 executes a process to store information regarding the sudden braking percentage, which was received by the transmitter-receiver unit 52 from the navigation device 1 installed in each vehicle 3, in the user database 51 as sorted per vehicle 3. As explained above, in the present embodiment, the information regarding the sudden braking percentage includes information regarding the points assigned depending on the sudden braking percentage, as well as information regarding the braking frequency and the post-correction sudden braking frequency, which serve as source information for calculating the sudden braking percentage. Here, the information regarding the points assigned depending on the sudden braking percentage is specifically point information per trip that is assigned depending on the sudden braking percentage between turning the main power source on and off. Also, the information regarding the braking frequency and the post-correction sudden braking frequency is also information per trip between turning the main power source on and off. Such information is sent from the navigation device 1 as information per trip of the vehicle 3 when the main power source of the vehicle 3 is turned off, and received by the transmitter-receiver unit 52. The storage processing unit 53 stores information regarding the received sudden braking percentage in the user database 51 as associated with identification information for each vehicle 3 and information regarding the date and time received. Here, the identification information of the vehicles 3 may use the license plate numbers of the vehicles 3, or use identification codes of the navigation devices 1 or vehicles 3, for example. 2-3. Sum processing unit

The sum processing unit 54 executes a process to sum information regarding the sudden braking percentage for each vehicle 3 stored in the user database 51 and generate the evaluation information 61 for each vehicle 3 (each navigation device 1). Specifically, the sum processing unit 54 sums the point information per trip received from each vehicle 3 for each predetermined period and generates the ranking information 65 that represents the ranking of point totals comparing the plurality of vehicles 3. In the present embodiment, the sum processing unit 54 computes the total points acquired per month by each vehicle 3, and generates the ranking information 65 that represents the ranking as compared to other vehicles 3. Furthermore, the sum processing unit 54 sums the points acquired within a predetermined period by each vehicle 3, and generates the level information 66 that represents the level assigned in accordance with the sum result. In the present embodiment, the sum processing unit 54 determines the level of each vehicle 3 by raising the level for a higher rank or reducing the level for a lower rank depending on the ranking of the total points acquired in the predetermined period (e.g. in one year). Note that the level until the initial passage of the predetermined period may be set to any level, such as the lowest level or an intermediate level. The generated ranking information 65 and level information 66 are stored in the user database 51 as associated with the identification information of each vehicle 3.

The sum processing unit 54 also integrates information regarding the points per trip received from the vehicles 3 and calculates the total points acquired thus far. As explained above, the total points are an integrated value that is integrated per predetermined period, or an integrated value of all the points acquired thus far. Information regarding the calculated total points is stored in the user database 51 as associated with the identification information of each vehicle 3. Information regarding the total points thus stored in the user database 51 is used for backing up and confirming information regarding the total points stored in the memory 32 of each navigation device 1. Therefore, such information matches information regarding the total points stored in the memory 32 of the navigation device 1 as the vehicle point data 39.

2-4. Distribution processing unit

The distribution processing unit 55 executes a process to read out from the user database 51 the ranking information 65 and the level information 66, which serve as the evaluation information 61 generated by the sum processing unit 54, in response to a request from the external information acquisition unit 27 of each navigation device 1, and then sends such information to each navigation device 1. When update information is generated for updating the point rules 38 or the advice data 37 by an update information generation unit (not shown), the distribution processing unit 55 also executes a process to send such update information to the navigation device 1.

3. Procedure for operation processing

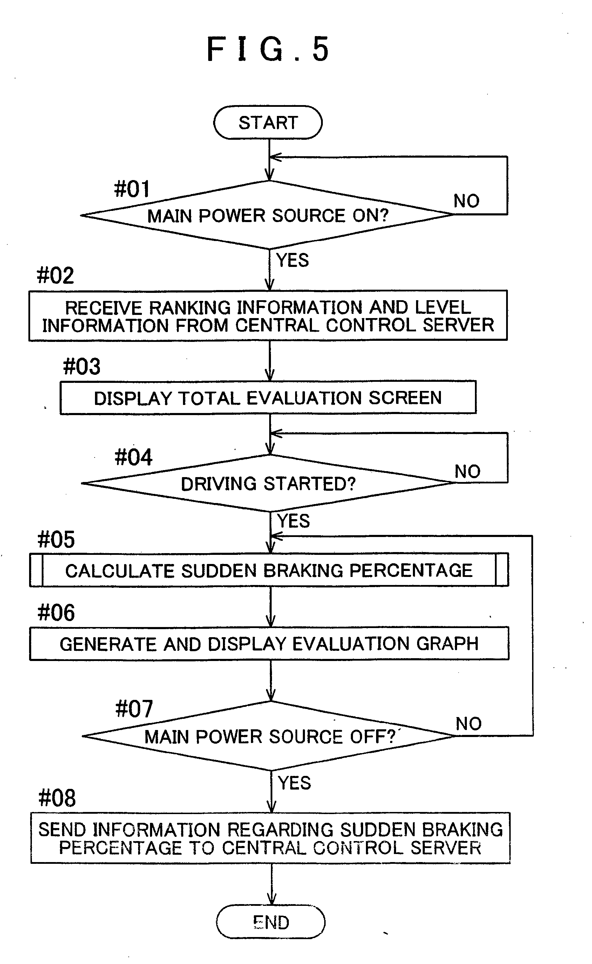

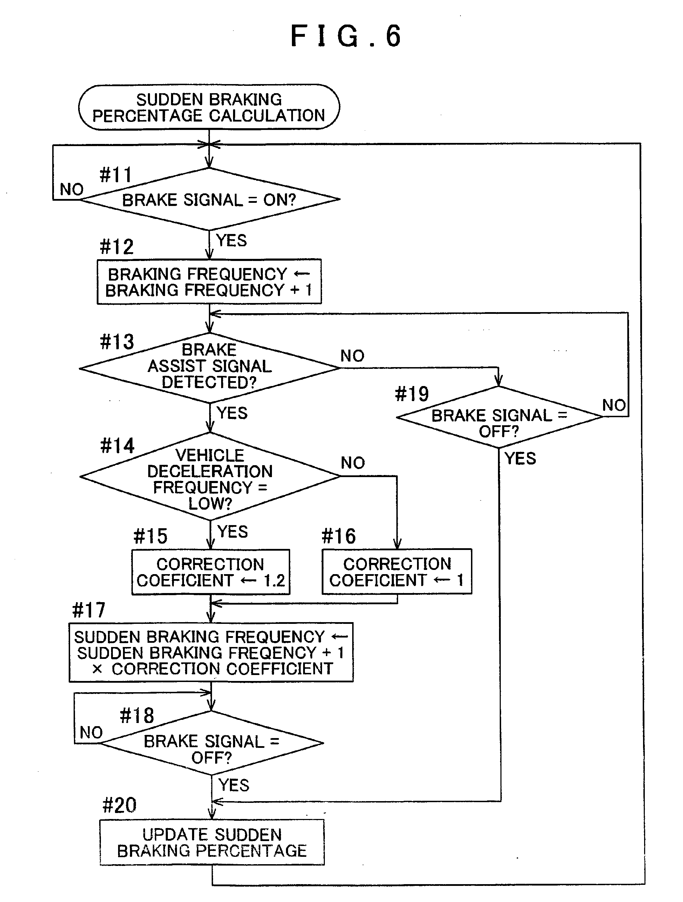

Next, a procedure for a safe driving evaluation process (a safe driving evaluation method) that is executed in the navigation device 1 according to the present embodiment will be explained. FIG. 5 is a flowchart that shows an overall procedure for the safe driving evaluation process according to the present embodiment. FIG. 6 is a flowchart that shows a procedure for a sudden braking percentage calculation process at #05 of FIG. 5. The description below will follow the flowcharts.

3-1. Overall procedure for safe driving evaluation processing

The overall procedure for the safe driving evaluation processing will now be described. As shown in FIG. 5, if the main power switch 4 of the vehicle 3 installed with the navigation device 1 is turned on (YES at #01), the external information acquisition unit 27 requests the ranking information 65 and the level information 66, which serve as the evaluation information 61 for the vehicle 3, from the central control server 2, and receives the information (#02). The total evaluation screen is then displayed (#03). As shown in FIG. 3, the total evaluation screen includes a display of the point information 62 that indicates the points acquired during previous travel (previously acquired points) and the total points, as well as a display of the ranking information 65 and the level information 66. Note that, although not shown in the figure, the advice information is also displayed together with the above information. Here, the point information 62 is calculated by the point calculation unit 24 and acquired from the vehicle point data 39 stored in the memory 32. The advice information is acquired by the advice acquisition unit 26 reading out advice information with content that corresponds to the sudden braking percentage during previous travel from the advice data 37 stored in the memory 32. The ranking information 65 and the level information 66 are received and acquired from the central control server 2 at #02. The total evaluation screen is formed by arranging the above information in accordance with a predetermined format.

If the vehicle 3 has started traveling (YES at #04), the percentage calculation unit 22 executes a process to calculate the sudden braking percentage (#05). The sudden braking percentage calculation processing will be described in detail later based on the flowchart in FIG. 6. Next, the graph generation unit 25 generates and displays the evaluation graph information 64 (#06). As shown in FIG. 4, the evaluation graph information 64 is a graph display that visually represents the safe driving percentage derived from the sudden braking percentage at certain times. The evaluation graph information 64 includes a graph of the current value of the safe driving percentage and a graph of the past average value of the safe driving percentage. The processing at #05 and #06 is repeatedly executed until the main power source is turned off. Accordingly, once the main power source of the vehicle 3 is turned on, until the main power source is turned off (NO at #07), the sudden braking percentage at certain times is calculated as needed and the evaluation graph information 64 that shows the safe driving percentage at certain times is displayed on the display input device 47.

If the main power source is subsequently turned off (YES at #07), the send processing unit 29 sends information regarding the sudden braking percentage between turning the main power source on and off to the central control server 2 (#08). Here, as explained above, the information regarding the sent sudden braking percentage includes the point information per trip, as well as information regarding the braking frequency and the post-correction sudden braking frequency, which serve as source information for calculating the sudden braking percentage. The point information per trip in such case is information regarding the points assigned depending on the sudden braking percentage between turning the main power source on and off. Note that the sudden braking percentage between turning the main power source on and off is equivalent to the sudden braking percentage at certain times as calculated at #05 before the main power source is turned off. The overall procedure of the safe driving evaluation processing is then ended.

3-2. Procedure for sudden braking percentage calculation processing

The procedure for the sudden braking percentage calculation processing at #05 in FIG. 5 will be described next. As shown in FIG. 6, if the brake signal detection unit 15 detects the brake signal (YES at #11), the brake counting unit 18 adds 1 to the braking frequency to update the braking frequency (#12). The process next proceeds to determine whether the brake assist signal detection unit 17 has detected the brake assist signal (#13). If the brake assist signal has been detected (YES at #13), the vehicle deceleration frequency determination unit 14 determines whether the vehicle deceleration frequency is low for the road where sudden braking occurred (#14). If it is determined that the vehicle deceleration frequency is low (YES at #14), the percentage calculation unit 22 sets the correction coefficient to 1.2. However, if it is determined that the vehicle deceleration frequency is not low (NO at #14), the percentage calculation unit 22 sets the correction coefficient to 1.0. The percentage calculation unit 22 then adds the product of 1 and the correction coefficient to the pre-update sudden braking frequency (#17). The process subsequently stands by until the brake signal turns off (NO at #18). When the brake signal turns off (YES at #18), the percentage calculation unit 22 updates the sudden braking percentage (#20), after which the process returns to #11.

Meanwhile, if the brake assist signal is not detected at #13 (NO at #13), the process proceeds to determine whether the brake signal is off (#19). If the brake signal is not off (NO at #19), the process returns to #13. However, if the brake signal is off (YES at #19), the percentage calculation unit 22 updates the sudden braking percentage (#20), after which the process returns to #11.

After returning to #11, the process stands by until the brake signal is detected by the brake signal detection unit 15 again (NO at #11). Once the brake signal is detected (YES at #11), the above processing is executed again. In other words, the above processing is repeatedly executed each time the vehicle 3 brakes.

Other Embodiments

(1) In the embodiment described above, as an example, a case was explained in which the increment for updating the sudden braking frequency, which is the numerator of Equation (1) for calculating the sudden braking percentage, is corrected so as to be larger than normal if sudden braking occurs on a road with a low vehicle deceleration frequency. However, the embodiments of the present invention are not limited to this example. Namely, in another preferred embodiment of the present invention, the braking frequency, i.e., the denominator of Equation (1), may be corrected. For example, the sudden braking frequency is updated by adding 1 to the pre-update sudden braking frequency, and the braking frequency is updated by adding a product of 1 and the correction coefficient to the pre-update braking frequency. In such case, unlike the above embodiment, the correction rules 40 preferably set the correction coefficient to a value under 1.0 if the sudden braking occurred on a road with a low vehicle deceleration frequency, and set the correction coefficient to 1.0 if the sudden braking did not occur on a road with a low vehicle deceleration frequency. Therefore, the sudden braking percentage can be corrected to a higher value by correcting the increment for updating the braking encounter frequency to a smaller value. A configuration that corrects the increments of both the sudden braking frequency and the braking frequency may also be used, as well as a configuration that sets the increments when updating to 1 for both the sudden braking frequency and the braking frequency, without correcting either the sudden braking frequency or the braking frequency. Furthermore, a configuration may be used that sets the increments when updating to 1 for both the sudden braking frequency and the braking frequency, and corrects the sudden braking percentage by adding or subtracting a predetermined value to or from the sudden braking percentage calculated based on Equation (1) or by multiplying the sudden braking percentage by a predetermined coefficient.

In the embodiment described above, as an example, a case was explained in which the vehicle deceleration frequency determination unit 14 determines whether the vehicle deceleration frequency is low for the road where sudden braking occurred. However, the embodiments of the present invention are not limited to this example. Namely, in another preferred embodiment of the present invention, there may be many thresholds for determining the vehicle deceleration frequency for the road where sudden braking occurred, and the vehicle deceleration frequency determination unit 14 may determine the vehicle deceleration frequency for the road according to a plurality of levels. For example, the vehicle deceleration frequency determination unit 14 may determine the vehicle deceleration frequency for the road where sudden braking occurred as one of three levels, low, medium and high, and different correction coefficients may be set for each level.

(2) In the embodiment described above, as an example, a case was explained in which the sudden braking determination unit 19 determines whether sudden braking occurred based on whether the brake assist signal has been detected by the brake assist signal detection unit 17. However, the embodiments of the present invention are not limited to this example. Namely, in another preferred embodiment of the present invention, the navigation device 1 may include an acceleration information detection unit that acquires information indicating an acceleration of the vehicle 3. The determination regarding whether sudden braking occurred may then be based on the magnitude of deceleration acquired by the acceleration information detection unit. If the distance sensor 43 is provided with a sensor for detecting acceleration in such case, the acceleration information detection unit may acquire information indicating the acceleration of the vehicle 3 from the distance sensor 43. In yet another preferred embodiment of the present invention, the navigation device 1 may include a speed information detection unit that acquires information indicating a speed of the vehicle 3. The speed of the vehicle 3 before braking and the speed of the vehicle 3 after braking may then be detected, and the deceleration calculated based on a difference thereof.

(3) In the embodiment described above, as an example, a case was explained in which the vehicle deceleration frequency determination unit 14 determines whether the vehicle deceleration frequency is low for a road where sudden braking occurred based on the number of traffic signals and intersections present within a prescribed deceleration frequency determination zone, which is set using the point where sudden braking occurred as a reference point. However, the embodiments of the present invention are not limited to this example. Namely, in another preferred embodiment of the present invention, the map date 34 may be referenced to acquire the road type information for the road where sudden braking occurred, and the vehicle deceleration frequency determination unit 14 may determine whether the vehicle deceleration frequency for the road is low based on the road type information. For example, a road indicated as an expressway in the road type information may be determined as having a low vehicle deceleration frequency.

(4) In the embodiment described above, as an example, a case was explained in which the vehicle deceleration frequency determination unit 14 acquires the number of traffic signals and intersections present on the road based on the map data 34 stored in the map database 31 provided in the navigation device 1. However, the embodiments of the present invention are not limited to this example. Namely, the information pertaining to the number of traffic signals and intersections may be acquired based on information provided by a facility outside the vehicle 3, such as road traffic information or the like distributed from VICS (trademark: Vehicle Information and Communication System).

(5) In the embodiment described above, as an example, a case was explained in which the evaluation information acquisition unit 23 acquires the point information 62, advice information, the evaluation graph information 64, the ranking information 65, and the level information 66 as the evaluation information 61, and outputs them in a manner understandable to the driver. However, the embodiments of the present invention are not limited to this example. Namely, in another preferred embodiment of the present invention, only a portion of the above information may be acquired as the evaluation information 61. In addition, various other information representing an evaluation pertaining to the sudden braking percentage may be acquired as the evaluation information 61.

(6) In the embodiment described above, as an example, a case was explained in which the point calculation unit 24 provided in the navigation device 1 calculates the point for each trip and the total points acquired thus far, and stores these in the memory 32 of the navigation device 1. However, the embodiments of the present invention are not limited to this example. Namely, information regarding the points per trip as calculated by the point calculation unit 24 may be sent to the central control server 2 and the total points for each vehicle 3 calculated in the central control server 2. Alternatively, information regarding the sudden braking percentage per trip may be sent to the central control server 2, and the points per trip as well as the total points calculated in the central control server 2. In such case, the external information acquisition unit 27 acquires the information regarding the total points and the points per trip for the vehicle 3 from the central control server 2 through the transmitter-receiver unit 11 at a predetermined timing.

(7) The allocation of components respectively provided in the navigation device 1 and the central control server 2 as described in the above embodiment is but one example. Accordingly, aside from components that must be provided on the navigation device 1 side, such as the host vehicle position information acquisition unit 12, each component may be provided in either the navigation device 1 or the central control server 2. Therefore, in another preferred embodiment of the present invention, the overall configuration of the safe driving evaluation system may be provided in the navigation device 1 acting as the on-vehicle terminal device. Therefore, in yet another preferred embodiment of the present invention, the main configuration of the safe driving evaluation system may be entirely provided in the central control server 2 acting as the central control device. Here, the main configuration of the safe driving evaluation system includes the vehicle deceleration frequency determination unit 14, the percentage calculation unit 22 acting as the correction unit and the percentage calculation unit, and the evaluation information acquisition unit 23.

(8) In the embodiment described above, as an example, a case was explained in which the on-vehicle terminal device that structures the safe driving evaluation system according to the present invention is the navigation device 1. However, the embodiments of the present invention are not limited to this example. Namely, in another preferred embodiment of the present invention, the on-vehicle terminal device that structures the safe driving evaluation system according to the present invention may be a control device of the vehicle 3 that is unrelated to the navigation device 1.

The present invention is well suited for application to a safe driving evaluation system and a safe driving evaluation program that perform a safe driving evaluation based on a sudden braking percentage, which considers the necessity of braking at a location where sudden braking occurred.

A safe driving evaluation system comprises a counting unit that counts a frequency of a braking operation of a vehicle, a determination unit that determines whether the braking operation is a sudden braking operation, a percentage calculation unit that calculates a sudden braking percentage as a ratio of a sudden braking operation frequency, which is the number of times the braking operation is determined as a sudden braking operation by the determination unit, to the braking operation frequency counted by the counting unit, a correction unit that determines when sudden braking occurs whether a vehicle deceleration frequency is low for a road where the sudden braking occurred, and corrects the sudden braking percentage to a higher value if the vehicle deceleration frequency is determined as low, and an evaluation information acquisition unit that acquires evaluation information based on the sudden braking percentage.

**Claims**

1.  A safe driving, evaluation system comprising:

    a counting unit (18) that counts a frequency of a braking operation of a vehicle;
    a determination unit (19) that determines whether the braking operation is a sudden braking operation;
    a percentage calculation unit (22) that calculates a sudden braking percentage as a ratio of a sudden braking operation frequency, which is the number of times the brazing operation is determined as a sudden braking operation by the determination unit (19), to the braking operation frequency counted by the counting unit (18)
    **characterised by**
    a correction unit that determines when sudden braking occurs whether a vehicle deceleration frequency is low for a road where the sudden braking occurred, and corrects the sudden braking percentage to a higher value if the vehicle deceleration frequency is determined as low and
    an evaluation information acquisition unit (23) that acquires evaluation information based on the sudden braking percentage.

2.  The safe driving evaluation system according to claim 1, further comprising:

    a brake assist detection unit (17) that detects an operation signal of a brake assist device of the vehicle, wherein the determination unit (19) determines whether the braking operation is a sudden braking operation based on the operation signal.

3.  The safe driving evaluation system according to claim 1, further comprising:

    an acceleration information acquisition unit that acquires information indicating an acceleration of the vehicle, wherein the determination unit (19) determines whether the braking operation is a sudden braking operation based on a deceleration detected by the acceleration information acquisition unit.

4.  The safe driving evaluation system according to any one of claims 1 to 3, wherein the correction unit determines whether the vehicle deceleration frequency is low for a road where sudden braking occurred based on at least one of the number of traffic signals and intersections present within a prescribed deceleration frequency determination zone, which is set using a point where the sudden braking occurred as a reference point.

5.  The safe driving evaluation system according to claim 4, wherein the deceleration frequency determination zone is set such that a zone ahead of the point where sudden braking occurred is larger than a zone behind the point.

6. The safe driving evaluation system according to claim 4 or 5, further comprising:

   map data that is referable and includes information regarding a location where at least one of a traffic signal and an intersection exist, wherein
   the correction unit acquires at least one of the number of traffic signals and intersections from the map data.

7. The safe driving evaluation system according to any one of claims 1 to 3, further comprising:

   referable map data that includes road type information representing types of roads, wherein
   the correction unit determines whether the vehicle deceleration frequency is low for a road where the sudden braking occurred based on the road type information acquired from the map data.

8. The safe driving evaluation system according to any one of claims 1 to 7, wherein
   the evaluation information acquisition unit (23) acquires as the evaluation information at least one of points assigned depending on the sudden braking percentage, advice whose content depends on the sudden braking percentage, and a graph display that visually represents the sudden braking percentage at certain times.

9. The safe driving evaluation system according to any one of claims I to 8, further comprising:

   an information collection unit that collects information regarding the sudden braking percentage from a plurality of vehicles, wherein
   the evaluation information acquisition unit (23) acquires as the evaluation information at least one of a ranking for each vehicle regarding the sudden braking percentage as compared to the other vehicles and a level assigned based on the past sudden braking percentages of each vehicle compared to the other vehicles.

10. The safe driving evaluation system according to claim 1 or 9, further comprising:

    an on-vehicle terminal device (1) installed in the vehicle; and
    a central control device (52) provided in communication with a plurality of the on-vehicle terminal devices, wherein
    when a main power source of the vehicle installed with the on-vehicle terminal device is turned off, the on-vehicle terminal device (1) sends information regarding the sudden braking percentage between turning the main power source on and off to the central control device (52) and
    the central control device (52) generates the evaluation information for the on-vehicle terminal device (1) based on the information regarding the sudden braking percentage received from the on-vehicle terminal device.

11. A safe driving evaluation program performing in a computer the functions of:

    counting a frequency of a braking operation of a vehicle;
    determining whether the braking operation is a sudden braking operation;
    calculating a sudden braking percentage (05) as a ratio of a sudden braking operation frequency, which is the number of times the braking operation is determined as a sudden braking operation by the determination function, to the braking operation frequency counted by the counting function
    **characterized by**
    determining when sudden braking occurs whether a vehicle deceleration frequency is low (14) for a road where the sudden braking occurred, and correcting (15) the sudden braking percentage to a higher value if the vehicle deceleration frequency is determined as low; and
    acquiring evaluation information based on the sudden braking percentage.

**Patentansprüche**

1. Fahrsicherheitsevaluierungssystem, mit:

   einer Zähleinheit (18), die eine Häufigkeit einer Bremsoperation eines Fahrzeugs zählt;
   einer Bestimmungseinheit (19), die bestimmt, ob die Bremsoperation eine plötzliche Bremsoperation ist;
   einer Prozentzahlberechnungseinheit (22), die eine Prozentzahl eines plötzlichen Bremsens als ein Verhältnis einer Häufigkeit einer plötzlichen Bremsoperation, die die Anzahl ist, wie oft die Bremsoperation durch die Bestimmungseinheit (19) als eine plötzliche Bremsoperation bestimmt wird, zu der Bremsoperationshäufigkeit, die durch die Zähleinheit (18) gezählt wird, berechnet,
**gekennzeichnet durch**
eine Korrektureinheit, die bestimmt, wenn ein plötzliches Bremsen auftritt, ob eine Fahrzeugverlangsamungshäufigkeit für eine Straße, auf der das plötzliche Bremsen auftritt, niedrig ist, und die Prozentzahl eines plötzlichen Bremsens auf einen höheren Wert korrigiert, wenn bestimmt ist, dass die Fahrzeugverlangsamungshäufigkeit niedrig ist, und
eine Evaluierungsinformationsbeschaffungseinheit (23), die Evaluierungsinformationen basierend auf der Prozentzahl des plötzlichen Bremsens beschafft.

2. Fahrsicherheitsevaluierungssystem gemäß Anspruch 1, weiterhin mit:

einer Bremsunterstützungserfassungseinheit (17), die ein Operationssignal einer Bremsunterstützungseinrichtung des Fahrzeugs erfasst, wobei
die Bestimmungseinheit (19) basierend auf dem Operationssignal bestimmt, ob die Bremsoperation eine plötzliche Bremsoperation ist.

3. Fahrsicherheitsevaluierungssystem gemäß Anspruch 1, weiterhin mit:

einer Beschleunigungsinformationsbeschaffungseinheit, die Informationen beschafft, die eine Beschleunigung des Fahrzeugs angeben, wobei
die Bestimmungseinheit (19) basierend auf einer Verlangsamung, die durch die Beschleunigungsinformationsbeschaffungseinheit erfasst wird bestimmt, ob die Bremsoperation eine plötzliche Bremsoperation ist.

4. Fahrsicherheitsevaluierungssystem gemäß einem der Ansprüche 1 bis 3, wobei
die Korrektureinheit bestimmt, ob die Fahrzeugverlangsamungshäufigkeit für eine Straße, auf der ein plötzliches Bremsen auftritt, niedrig ist, basierend auf zumindest einem der Anzahl von Verkehrssignalen und Kreuzungen, die innerhalb einer vorbestimmten Verlangsamungshäufigkeitsbestimmungszone vorhanden sind, die unter Verwendung eines Punkts, an dem das plötzliche Bremsen auftritt, als ein Referenzpunkt eingestellt wird.

5. Fahrsicherheitsevaluierungssystem gemäß Anspruch 4, wobei
die Verlangsamungshäufigkeitsbestimmungszone derart eingestellt wird, dass eine Zone vor dem Punkt, an dem ein plötzliches Bremsen auftritt, größer ist als eine Zone hinter dem Punkt.

6. Fahrsicherheitsevaluierungssystem gemäß Anspruch 4 oder 5, weiterhin mit:

Kartendaten, auf die Bezug genommen werden kann, und die Informationen bezüglich eines Ort umfassen, an dem zumindest ein Verkehrssignals oder eine Kreuzung vorhanden ist, wobei
die Korrektureinheit zumindest eines der Anzahl von Verkehrssignalen und Kreuzungen von den Kartendaten beschafft.

7. Fahrsicherheitsevaluierungssystem gemäß einem der Ansprüche 1 bis 3, weiterhin mit:

Kartendaten, auf die Bezug genommen werden kann, die Straßenartinformationen umfassen, die Arten von Straßen darstellen, wobei
die Korrektureinheit bestimmt, ob die Fahrzeugverlangsamungshäufigkeit für eine Straße, auf der ein plötzliches Bremsen auftritt, niedrig ist, basierend auf den Straßenartinformationen, die von den Kartendaten beschafft werden.

8. Fahrsicherheitsevaluierungssystem gemäß einem der Ansprüche 1 bis 7, wobei
die Evaluierungsinformationsbeschaffungseinheit (23) als die Evaluierungsinformationen zumindest eines von Punkten, die in Abhängigkeit der Prozentzahl des plötzlichen Bremsens zugewiesen sind, einer Empfehlung, deren Inhalt von der Prozentzahl des plötzlichen Bremsens abhängt und eine graphische Anzeige, die die Prozentzahl des plötzlichen Bremsens zu bestimmten Zeiten visuell darstellt, beschafft.

9. Fahrsicherheitsevaluierungssystem gemäß einem der Ansprüche 1 bis 8, weiterhin mit:

einer Informationssammeleinheit, die Informationen bezüglich der Prozentzahl des plötzlichen Bremsens von einer Vielzahl von Fahrzeugen sammelt, wobei

die Evaluierungsinformationsbeschaffungseinheit (23) als die Evaluierungsinformationen zumindest eines einer Rangfolge für jedes Fahrzeug bezüglich der Prozentzahl des plötzlichen Bremsens im Vergleich mit anderen Fahrzeugen und eines Levels, das basierend auf den vergangenen Prozentzahlen des plötzlichen Bremsens von jedem Fahrzeug verglichen mit anderen Fahrzeugen zugewiesen wird, beschafft.

10. Fahrsicherheitsevaluierungssystem gemäß Anspruch 1 oder 9, weiterhin mit:

einer fahrzeugseitigen Terminaleinrichtung (1), die in dem Fahrzeuge installiert ist; und
einer zentralen Steuerungseinrichtung (52), die mit einer Vielzahl von fahrzeugseitigen Terminaleinrichtungen in Kommunikation stehend bereitgestellt ist, wobei
wenn eine Hauptenergiequelle des Fahrzeugs, in dem die fahrzeugsseitige Terminaleinrichtung installiert ist, abgeschaltet wird, die fahrzeugseitige Terminaleinrichtung (1) Informationen bezüglich der Prozentzahl des plötzlichen Bremsens zwischen dem Ein- und Ausschalten der Hauptenergiequelle an die zentrale Steuerungseinrichtung (52) sendet, und
die zentrale Steuerungseinrichtung (52) die Evaluierungsinformationen für die fahrzeugseitige Terminaleinrichtung (1) basierend auf den Informationen bezüglich der Prozentzahl eines plötzlichen Bremsens, die von der fahrzeugseitigen Terminaleinrichtung empfangen werden, erzeugt.

11. Fahrsicherheitevaluierungsprogramm, das in einem Computer die Funktionen durchführt, des:

Zählens einer Häufigkeit einer Bremsoperation eines Fahrzeugs;
Bestimmens, ob die Bremsoperation eine plötzliche Bremsoperation ist;
Berechnens einer Prozentzahl eines plötzlichen Bremsens (5) als ein Verhältnis einer Häufigkeit einer plötzlichen Bremsoperation, was die Anzahl ist, wie oft die Bremsoperation durch die Bestimmungsfunktion als eine plötzliche Bremsoperation bestimmt wird, zu der Bremsoperationshäufigkeit, die durch die Zählfunktion gezählt wird, **gekennzeichnet durch**
Bestimmen, wenn ein plötzliches Bremsen auftritt, ob eine Fahrzeugverlangsamungshäufigkeit für eine Straße, auf der das plötzliche Bremsen auftritt, niedrig ist (14) und Korrigieren (15) der Prozentzahl des plötzlichen Bremsens auf einen höheren Wert, wenn bestimmt ist, dass die Fahrzeugverlangsamungshäufigkeit niedrig ist; und
Beschaffen von Evaluierungsinformationen basierend auf der Prozentzahl des plötzlichen Bremsens.

**Revendications**

1. Système d'évaluation de conduite sûre comprenant :

une unité de comptage (18) qui compte une fréquence d'une opération de freinage d'un véhicule ;
une unité de détermination (19) qui détermine si l'opération de freinage est une opération de freinage soudain ;
une unité de calcul de pourcentage (22) qui calcule un pourcentage de freinages soudains en tant que rapport entre une fréquence d'opération de freinage soudain, qui est le nombre de fois que l'opération de freinage a été déterminée comme étant une opération de freinage soudain par l'unité de détermination (19), et la fréquence d'opération de freinage comptée par l'unité de comptage (18),
**caractérisé par**
une unité de correction qui détermine, lorsqu'un freinage soudain se produit, si une fréquence de décélération de véhicule est faible pour une route sur laquelle le freinage soudain s'est produit, et qui corrige le pourcentage de freinages soudains à une valeur plus élevée s'il est déterminé que la fréquence de décélération de véhicule est faible, et
une unité d'acquisition d'informations d'évaluation (23) qui acquiert des informations d'évaluation basées sur le pourcentage de freinages soudains.

2. Système d'évaluation de conduite sûre selon la revendication 1, comprenant en outre :

une unité de détection d'assistance au freinage (17) qui détecte un signal d'actionnement d'un dispositif d'assistance au freinage du véhicule, dans lequel
l'unité de détermination (19) détermine si l'opération de freinage est une opération de freinage soudain sur la base du signal d'actionnement.

**3.** Système d'évaluation de conduite sûre selon la revendication 1, comprenant en outre :

une unité d'acquisition d'informations d'accélération qui acquiert des informations indiquant une accélération du véhicule, dans lequel
l'unité de détermination (19) détermine si l'opération de freinage est une opération de freinage soudain sur la base d'une décélération détectée par l'unité d'acquisition d'informations d'accélération.

**4.** Système d'évaluation de conduite sûre selon l'une quelconque des revendications 1 à 3, dans lequel
l'unité de correction détermine si la fréquence de décélération de véhicule est faible pour une route sur laquelle un freinage soudain s'est produit sur la base d'au moins l'un du nombre de feux de signalisation et du nombre d'intersections présents dans une zone de détermination de fréquence de décélération prescrite, qui est déterminé en utilisant un point auquel le freinage soudain s'est produit en tant que point de référence.

**5.** Système d'évaluation de conduite sûre selon la revendication 4, dans lequel
la zone de détermination de fréquence de décélération est déterminée de sorte qu'une zone en avant du point auquel un freinage soudain s'est produit soit plus grande qu'une zone en arrière du point.

**6.** Système d'évaluation de conduite sûre selon la revendication 4 ou 5, comprenant en outre :

des données de carte auxquelles il peut être fait référence et qui comprennent des informations concernant un emplacement auquel au moins l'un d'un feu de signalisation et d'une intersection existe, dans lequel
l'unité de correction acquiert au moins l'un du nombre de feux de signalisation et du nombre d'intersections à partir des données de carte.

**7.** Système d'évaluation de conduite sûre selon l'une quelconque des revendications 1 à 3, comprenant en outre :

des données de carte auxquelles il peut être fait référence qui comprennent des informations de type de route représentant des types de routes, dans lequel
l'unité de correction détermine si la fréquence de décélération de véhicule est faible pour une route où le freinage soudain s'est produit sur la base des informations de type de route acquises à partir des données de carte.

**8.** Système d'évaluation de conduite sûre selon l'une quelconque des revendications 1 à 7, dans lequel
l'unité d'acquisition d'informations d'évaluation (23) acquiert, en tant qu'informations d'évaluation, au moins l'un de points attribués en fonction du pourcentage de freinages soudains, d'un conseil dont le contenu dépend du pourcentage de freinages soudains et d'un affichage graphique qui représente visuellement le pourcentage de freinages soudains à certains instants.

**9.** Système d'évaluation de conduite sûre selon l'une quelconque des revendications 1 à 8, comprenant en outre :

une unité de collecte d'informations qui collecte des informations concernant le pourcentage de freinages soudains d'une pluralité de véhicules, dans lequel
l'unité d'acquisition d'informations d'évaluation (23) acquiert, en tant qu'informations d'évaluation, au moins l'un d'un classement pour chaque véhicule concernant le pourcentage de freinages soudains comparé aux autres véhicules et d'un niveau attribué sur la base des pourcentages de freinages soudains passés de chaque véhicule comparé aux autres véhicules.

**10.** Système d'évaluation de conduite sûre selon la revendication 1 ou 9, comprenant en outre :

un dispositif terminal sur véhicule (1) installé dans le véhicule ; et
un dispositif de commande central (52) prévu en communication avec une pluralité des dispositifs terminaux sur véhicule, dans lequel
lorsqu'une source d'alimentation principale du véhicule équipé du dispositif terminal sur véhicule est désactivée, le dispositif terminal sur véhicule (1) envoie des informations concernant le pourcentage de freinages soudains entre l'activation et la désactivation de la source d'alimentation principale au dispositif de commande central (52), et
le dispositif de commande central (52) génère les informations d'évaluation pour le dispositif terminal sur véhicule (1) sur la base des informations concernant le pourcentage de freinages soudains reçues du dispositif terminal sur véhicule.

**11.** Programme d'évaluation de conduite sûre exécutant dans un ordinateur les fonctions
de comptage d'une fréquence d'une opération de freinage d'un véhicule ;
de détermination si l'opération de freinage est une opération de freinage soudain ;
de calcul d'un pourcentage de freinages soudains (05) en tant que rapport entre une fréquence d'opération de freinage soudain, qui est le nombre de fois que l'opération de freinage a été déterminée comme étant une opération de freinage soudain par la fonction de détermination, et la fréquence d'opération de freinage comptée par la fonction de comptage,
**caractérisé par**
la détermination, lorsqu'un freinage soudain se produit, si une fréquence de décélération de véhicule est faible (14) pour une route où le freinage soudain s'est produit, et la correction (15) du pourcentage de freinages soudains à une valeur plus élevée s'il est déterminé que la fréquence de décélération de véhicule est faible ; et
l'acquisition d'informations d'évaluation basées sur le pourcentage de freinages soudains.

# F I G . 1

# FIG.2

CENTRAL CONTROL SERVER

USER DATABASE — 51

TRANSMITTER-RECEIVER UNIT — 52

STORAGE PROCESSING UNIT — 53

SUM PROCESSING UNIT — 54

DISTRIBUTION PROCESSING UNIT — 55

2

1 3

1 3

1 3

# FIG.3

65(61)

TOTAL POINTS:

57,320 PTS

62(61)

PREVIOUS POINTS ACQUIRED:

58 PTS

66(61)

LEVEL: B

MONTHLY RANKING

AUGUST: 540th

JULY: 371st

JUNE: 1,023rd

# F I G . 4

EVALUATION GRAPH

PAST AVG CURRENT

100

64(61)

0

LEVEL: B

66(61)

N

100m

# F I G . 5

```
                    ┌─────────────┐
                    │    START    │
                    └─────────────┘
                           │
                           ▼           ◄────────┐
        #01                                      │
              MAIN POWER SOURCE ON?  ──── NO ────┘
                           │
                          YES
        #02                │
        ┌──────────────────────────────────────────┐
        │ RECEIVE RANKING INFORMATION AND LEVEL     │
        │ INFORMATION FROM CENTRAL CONTROL SERVER   │
        └──────────────────────────────────────────┘
             #03           │
        ┌──────────────────────────────────────────┐
        │      DISPLAY TOTAL EVALUATION SCREEN      │
        └──────────────────────────────────────────┘
                           │           ◄────────┐
        #04                                      │
                 DRIVING STARTED?  ──── NO ──────┘
                           │
                          YES
        #05                │           ◄────────┐
        ┌──────────────────────────────────────────┐
        │  │  CALCULATE SUDDEN BRAKING PERCENTAGE │ │
        └──────────────────────────────────────────┘
        #06                │
        ┌──────────────────────────────────────────┐
        │   GENERATE AND DISPLAY EVALUATION GRAPH   │
        └──────────────────────────────────────────┘
                           │
        #07                                      │
             MAIN POWER SOURCE OFF?  ──── NO ─────┘
                           │
                          YES
        #08                │
        ┌──────────────────────────────────────────┐
        │ SEND INFORMATION REGARDING SUDDEN BRAKING │
        │ PERCENTAGE TO CENTRAL CONTROL SERVER      │
        └──────────────────────────────────────────┘
                           │
                           ▼
                    ┌─────────────┐
                    │     END     │
                    └─────────────┘
```

# F I G . 6

```
        SUDDEN BRAKING
    PERCENTAGE CALCULATION
              |
   #11        |
NO _____▼_____
   <    BRAKE SIGNAL = ON?    >
              | YES
   #12        ▼
   ┌─────────────────────┐
   │ BRAKING FREQUENCY ← │
   │ BRAKING FREQUENCY + 1│
   └─────────────────────┘
              ▼
   #13      BRAKE                    NO
   <   ASSIST SIGNAL  >──────────────────┐
        DETECTED?                        |
              | YES                 #19  ▼
              ▼                    < BRAKE SIGNAL = >─ NO
   #14      VEHICLE                    OFF?
   <    DECELERATION  >─ NO             | YES
        FREQUENCY =    |
           LOW?        |
              | YES     |
   #15        ▼    #16  ▼
   ┌────────────┐  ┌────────────┐
   │ CORRECTION │  │ CORRECTION │
   │COEFICIENT←1.2│ │COEFICIENT←1│
   └────────────┘  └────────────┘
              ▼
   #17
   ┌──────────────────────────────┐
   │ SUDDEN BRAKING FREQUENCY ←   │
   │ SUDDEN BRAKING FREQENCY + 1  │
   │   × CORRECTION COEFFICIENT   │
   └──────────────────────────────┘
              ▼
   #18
NO <  BRAKE SIGNAL = >
        OFF?
              | YES
   #20        ▼
   ┌──────────────────┐
   │ UPDATE SUDDEN    │
   │BRAKING PERCENTAGE│
   └──────────────────┘
```

**EP 2 181 904 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008077502 A

- JP 2005007932 A